# EUROPÄISCHE PATENTSCHRIFT

(11) **EP 1 797 277 B1**
(45) Veröffentlichungstag und Bekanntmachung des Hinweises auf die Patenterteilung: **02.03.2011**
(21) Anmeldenummer: 05769865.6
(22) Anmeldetag: 04.08.2005
(51) Int. Cl.: E21B 10/58, B23B 51/02

(54) **BOHRWERKZEUG MIT EINEM ALS PLATTE ODER KOPF AUSGEBILDETEN SCHNEIDELEMENT**
DRILLING TOOL COMPRISING A CUTTING ELEMENT THAT IS CONFIGURED AS A PLATE OR HEAD
ALESEUSE DOTEE D'UN ELEMENT DE COUPE EN FORME DE PLAQUE OU DE TETE

(30) Priorität: 30.09.2004 DE 102004047469
(43) Veröffentlichungstag der Anmeldung: 20.06.2007
(73) Patentinhaber: ROBERT BOSCH GMBH, 70442 Stuttgart (DE)
(72) Erfinder: MOSER, Bernhard, 88361 Altshausen (DE); WIDMANN, Rainer, 88213 Ravensburg (DE)
(86) Internationale Anmeldenummer: PCT/EP2005/053851
(87) Internationale Veröffentlichungsnummer: WO 2006/034912

(56) Entgegenhaltungen:
- DE-A- 19 734 094

## Beschreibung

Die Erfindung betrifft ein Bohrwerkzeug gemäß dem Oberbegriff des Anspruchs 1.

Aus der DE 197 34 094 A1 ist ein Gesteinsbohrer bekannt, welcher ein als Platte ausgebildetes Schneidelement mit wenigstens einer durch eine Spanfläche und eine Freifläche definierten Schneidkante aufweist. Die Freifläche ist durch einen ersten Abschnitt mit einem kleinen Freiflächenwinkel und einen zweiten Abschnitt mit einem größeren Freiflächenwinkel gebildet, um das Eindringen des Gesteinsbohrers in das Material zu begünstigen.

Aufgabe der Erfindung ist es, ein Bohrwerkzeug vorzuschlagen, dessen Schneidelement im Bereich der Schneidkante bei insgesamt robustem Aufbau optimal für das Eindringen in das zu bearbeitende Material geeignet ist.

Diese Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Das erfindungsgemäße Bohrwerkzeug für eine insbesondere schlagende Beanspruchung weist an der Schneidkante einen ersten Freiflächenabschnitt auf, welcher durch eine konvexe Wölbung oder einen konvexen Polygonzug begrenzt ist, wenn dieser in einer Schnittebene betrachtet wird, die rechtwinklig von der Schneidkante geschnitten wird, wobei die vertikale Höhe einer durch diesen ersten Freiflächenabschnitt und einen zugehörigen ersten Spanflächenabschnitt gebildeten Rippe in einem Bereich von 0,1 mm bis 1,0 mm liegt. Durch diese vorspringende Ausbildung des ersten Freiflächenabschnitts mit den speziellen Abmessungen des Vorsprungs ist sichergestellt, dass der Vorsprung mit wenig Widerstand in das Material eindringt und eine Höhe aufweist, welche größer oder gleich der Eindringtiefe des Bohrwerkzeugs beim einzelnen Schlag ist. Somit ist ein Abbremsen des Bohrwerkzeugs durch den nachfolgenden zweiten Freiflächenabschnitt vermieden. Weiterhin ist es nicht erforderlich, den ersten Abschnitt der Freifläche als Kompromiss zwischen unterschiedlichen Anforderungen auszugestalten. Kern der Erfindung ist es somit, eine auf die Eindringtiefe des Bohrwerkzeugs beim einzelnen Schlag abgestimmte, aggressive Schneidengeometrie auszubilden und gleichzeitig die Spanfläche optimal abzustützen. In einem 1/10 mm-Bereich ist die Schneide bzw. der aus der Spanfläche und dem ersten Freiflächenabschnitt gebildete Nahbereich der Schneidkante als Rippe oder Schlagkörper ausgeführt, der bei hoher Stabilität ein optimales Eindringen in das Material erlaubt.

Eine vorteilhafte Ausbildung des Erfindungsgegenstandes sieht vor, die Rippe hinsichtlich ihrer vertikalen Abmessung bzw. Höhe insbesondere in einem Bereich von 0,1 mm bis 0,5 mm auszubilden. In diesem Bereich liegt üblicherweise die Eindringtiefe von Bohrwerkzeugen in Beton oder Stein mit einem Durchmesser bis 30 mm. Selbstverständlich werden bei besonders weichem Material höhere Eindringtiefen erzielt, welche eine Anpassung des Bohrwerkzeugs erfordern.

Weiterhin ist eine Zunahme der vertikalen Höhe der Rippe zur Längsachse hin vorgesehen. Hierdurch kann einem erhöhten Verschleiß im Bereich der Längsachse des Bohrwerkzeugs Rechnung getragen werden, der sich beispielsweise beim Bohren von stark armiertem Beton ergeben kann.

Die Erfindung sieht auch ein Bohrwerkzeug vor, dessen vertikale Höhe der Rippe zur Längsachse hin abnimmt. Eine derartige Geometrie ist beispielsweise für das Aufbohren vorgebohrter Löcher vorgesehen, da dort in einem ringförmigen äußeren Bereich ein erhöhter Verschleiß auftritt.

Gemäß der Erfindung folgt auf den ersten Freiflächenabschnitt wenigstens ein zweiter Freiflächenabschnitt. Durch diesen ist eine Verbreiterung und Stabilisierung des Schneidelements möglich.

Die Erfindung sieht auch vor, einem ersten Spanflächenabschnitt wenigstens einen zweiten Spanflächenabschnitt folgen zu lassen, um die Eigenschaften des Bohrwerkzeugs auch im Bereich der Spanfläche beeinflussen zu können.

Erfindungsgemäß schneidet eine gedachte Verlängerung des zweiten Freiflächenabschnitts das Schneidelement bzw. die Spanfläche unterhalb der Schneidkante. Durch eine derartige Orientierung des zweiten Freiflächenabschnitts ist ein stabiler Grundaufbau des Bohrwerkzeugs gewährleistet.

Weitere Einzelheiten der Erfindung werden in der Zeichnung anhand von schematisch dargestellten Ausführungsbeispielen beschrieben.

Hierbei zeigt:
- Figur 1a bis 1c: ein erfindungsgemäßes Bohrwerkzeug in Teilansicht in unterschiedlichen Ansichten;
- Figur 2a bis 2c: die Schneidplatte des in den Figuren 1a bis 1c dargestellten Bohrwerkzeugs in unterschiedlichen Ansichten;
- Figur 3: einen Schnitt durch ein herkömmliches Schneidelement zur Erläuterung der Bezeichnungen und
- Figur 4 bis 14: schematische Schnittansichten durch Schneidelemente unterschiedlicher Bohrwerkzeuge.

Alle Figuren sind als schematische Figuren zu verstehen, bei welchen insbesondere die Rippen regelmäßig größer dargestellt sind, um deren Form exakt zu zeigen.

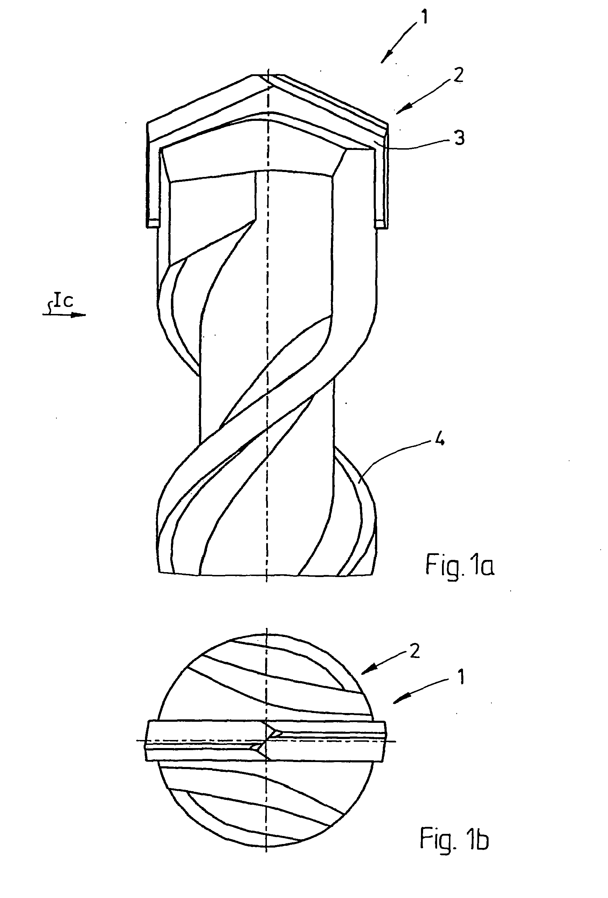

In der Figur 1a ist ein Bohrwerkzeug 1 in Seitenansicht teilweise dargestellt. Das Bohrwerkzeug 1 umfasst einen Bohrerkopf 2 mit einem Schneidelement 3, welches als Schneidplatte 3 ausgebildet ist, und eine Bohrerwendel 4. Auf die Darstellung eines Einsteckschafts, in welchen die Bohrerwendel 4 in ihrem weiteren, nicht dargestellten Verlauf übergeht, wurde verzichtet. Dieser Einsteckschaft ist beispielsweise als zylindrischer oder sechskantförmiger Einsteckschaft bzw. als SDS-Max-Einsteckschaft oder SDS-Plus-Einsteckschaft ausgebildet.

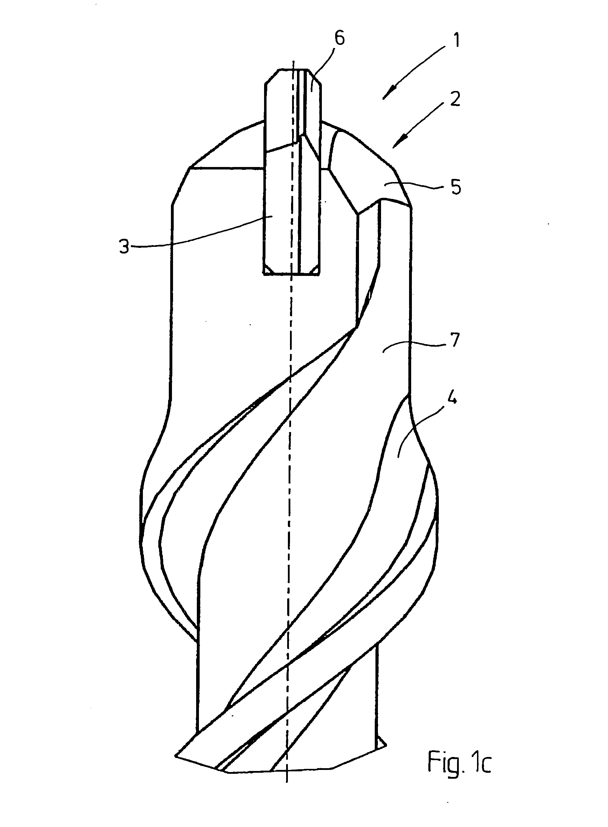

In der Figur 1b ist eine Draufsicht auf den Bohrerkopf 2 des Bohrwerkzeugs 1 abgebildet. Die Figur 1c zeigt eine Seitenansicht des in der Figur 1a dargestellten Bohrwerkzeugs 1 aus einer Pfeilrichtung Ic. In dieser Ansicht ist am Bohrerkopf 2 eine schräge Fläche 5 sichtbar, welche vor einer Spanfläche 6 des Schneidelements 3 liegt und Bohrmehl in eine Bohrmehlnut 7 der Bohrerwendel 4 fördert.

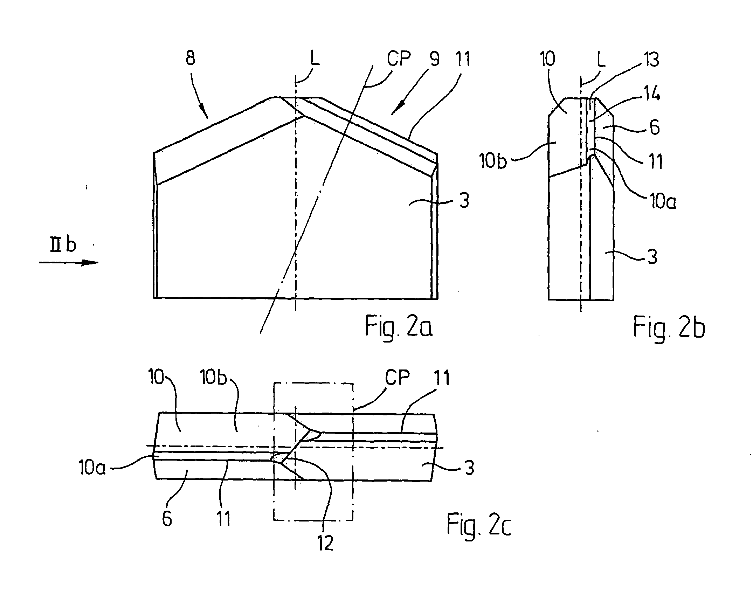

In den Figuren 2a bis 2c ist das Schneidelement 3 des in den Figuren 1a bis 1c gezeigten Bohrwerkzeugs in Einzelansichten dargestellt. Das Schneidelement 3, das als Schneidplatte 3 ausgebildet ist, ist symmetrisch zu einer Längsachse L aufgebaut und weist zwei Hauptschneiden 8, 9 auf. Aufgrund der symmetrischen Ausbildung wird im Folgenden nur jeweils die Hauptschneide 8 näher beschrieben. Die Hauptschneide 8 ist durch die Spanfläche 6 und eine Freifläche 10 gebildet, welche gemeinsam eine Schneidkante 11 bilden. Hierbei setzt sich die Freifläche 10 aus einem ersten Freiflächenabschnitt 10a und einem zweiten Freiflächenabschnitt 10b zusammen. Weiterhin ist das Schneidelement 3 durch eine Querschneide 12 charakterisiert. In der Figur 2b, welche eine Seitenansicht aus einer Pfeilrichtung IIb auf die Figur 2a zeigt, ist der erste Freiflächenabschnitt 10a als konvex gewölbte Fläche bzw. konvexe Wölbung 13 ausgebildet, welche parallel zur Schneidkante 11 verläuft. Zusammen mit einem zugehörigen Abschnitt der Spanfläche 6 bildet der erste Freiflächeabschnitt 10a räumlich betrachtet eine Rippe 14. In den Figuren 2a und 2c ist exemplarische eine Schnittebene CP eingezeichnet, welche von der Schneidkante 11 rechtwinklig geschnitten wird.

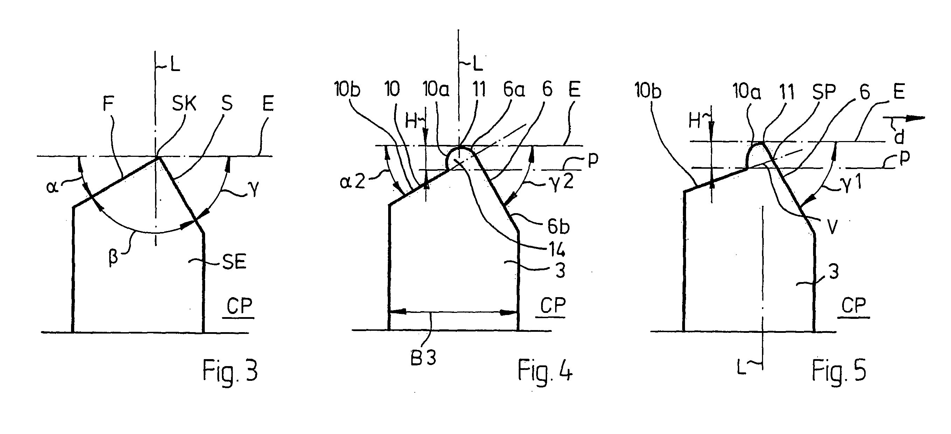

Die Figuren 3 bis 14 zeigen Schnitte durch Schneidelemente 3, welche in einer Schnittebene CP liegen, die entsprechend der in den Figuren 2a und 2c dargestellten Schnittebene CP ausgeführt sind. Zur Erhaltung der Übersichtlichkeit wurde jeweils auf eine Schraffierung der Schnittfläche verzichtet.

Zur Erläuterung der Begriffe ist in der Figur 3 ein Schnitt durch ein herkömmliches, aus dem Stand der Technik bekanntes Schneidelement SE dargestellt. Eine Freifläche F weist zu einer Ebene E, die senkrecht zu der Längsachse L steht, einen Freiflächenwinkel α auf. Weiterhin weist eine Spanfläche S zu dieser Ebene E einen Spanflächenwinkel γ auf. Die Freifläche F und Schneidfläche S schließen zusammen einen Keilwinkel β ein und definieren den Verlauf einer Schneidkante SK.

Die Figur 4 zeigt nach der in den Figuren 1a bis 1c bzw. 2a bis 2c dargestellten Ausführungsvariante eine zweite Ausführungsform eines Schneidelements 3 für ein erfindungsgemäßes Bohrwerkzeug. Eine Schneidkante 11 des Schneidelements 3 verläuft an einem Schnittpunkt einer waagrechten Ebene E mit dem Schneidelement 3. Seitlich der Schneidkante 11 verläuft die Freifläche 10 in einem ersten Freiflächenabschnitt 10a im Schnitt konvex gewölbt und in einem zweiten Freiflächenabschnitt 10b unter einem Freiflächenwinkel α₂. Eine Spanfläche 6 besteht ebenfalls aus einem ersten, konvex gewölbten Spanflächenabschnitt 6a und einem zweiten, geraden Spanflächenabschnitt 6b, welcher unter einem Winkel γ₂ verläuft. Der erste Freiflächenabschnitt 10a, welcher räumlich betrachtet eine Rippe 14 bildet, weist eine vertikale Höhe H auf, welche als Abstand zwischen der Ebene E und einer weiteren parallel zur Ebene E bzw. senkrecht zu einer Längsachse L verlaufenden Ebene P gemessen wird. Hierbei schneidet die Ebene P das Schneidelement 3 im Übergang des ersten Freiflächenabschnitts 10a in den zweiten Freiflächenabschnitt 10b. Die vertikale Höhe H der Rippe 14 weist Werte von 0,1 mm bis 1,0 mm auf, wobei das Schneidelement 3 eine Breite B₃ aufweist, die in Abhängigkeit vom Bohrwerkzeugdurchmesser z.B. bei einer Schneidplatte etwa zwischen 1 mm und 6 mm liegen kann. Insofern ist die Rippe in der schematischen Schnittdarstellung vergrößert gezeigt.

In der Figur 5 ist eine dritte Ausführungsvariante eines Schneidelements 3 für ein erfindungsgemäßes Bohrwerkzeug dargestellt. Dieses Schneidelement 3 weist im Unterschied zu dem in der Figur 4 dargestellten Schneidelement eine einteilige Spanfläche 6 auf, welche ohne Richtungsänderung bis zur Schneidkante 11 unter einem Spanflächenwinkel γ₁ verläuft. Ein erster und ein zweiter Freiflächenabschnitt 10a, 10b sind analog zu dem in der Figur 4 dargestellten Schneidelement 3 ausgebildet. Eine Verlängerung V des zweiten Freiflächenabschnitts 10b in eine Drehrichtung d schneidet die Spanfläche 6 in einem Schnittpunkt SP, welcher unterhalb der Schneidkante 11 liegt.

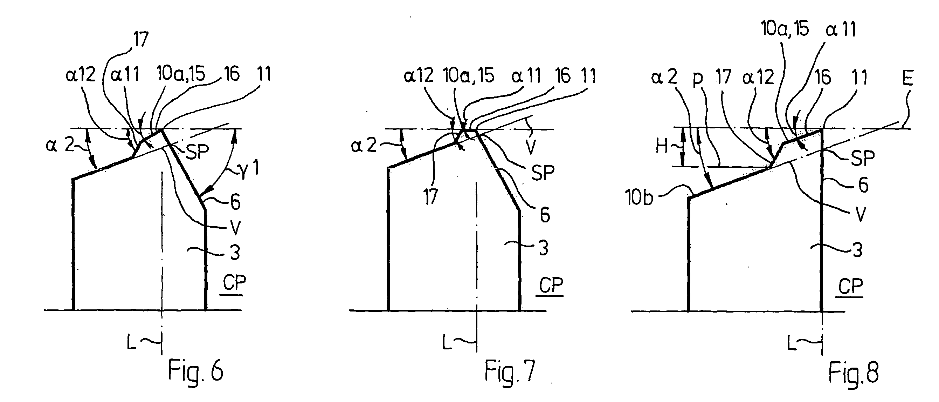

In den Figuren 6 bis 8 ist eine vierte, fünfte und sechste Ausführungsvariante für ein Schneidelement 3 für ein erfindungsgemäßes Bohrwerkzeug dargestellt. Diesen drei Ausführungsvarianten ist gemeinsam, dass ein erster Freiflächenabschnitt 10a durch einen konvexen Polygonzug 15 gebildet ist. Hierbei weisen Abschnitte 16, 17 des konvexen Polygonzugs 15 jeweils unterschiedliche Freiflächenwinkel α₁₁ bzw. α₁₂ auf. Bei allen drei Ausführungsvarianten schneidet eine Verlängerung V des zweiten Freiflächenabschnitts 10b das Schneidelement 3 bzw. die Spanfläche 6 unterhalb einer Schneidkante 11 in einem Schnittpunkt SP. In der Figur 8 ist beispielhaft die vertikale Höhe H der Rippe 14 eingezeichnet. Diese ist als Abstand zwischen Ebenen E und P definiert, zu welchen die Längsachse L senkrecht steht und welche eine Schneidkante 11 bzw. den Übergang vom ersten Freiflächenabschnitt 10a in einen zweiten Freiflächenabschnitt 10b schneiden.

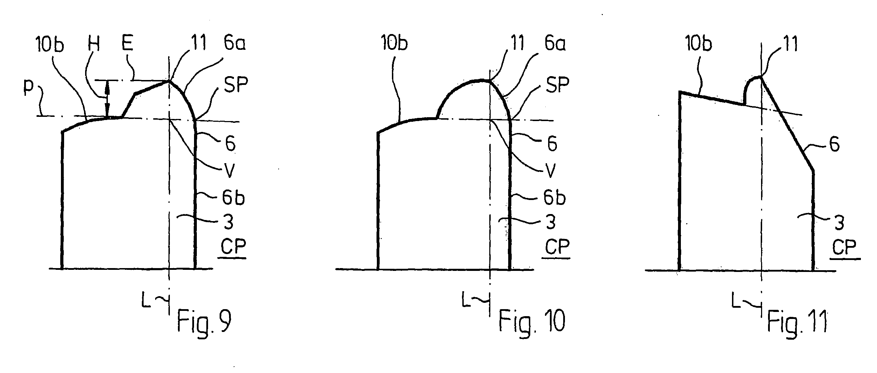

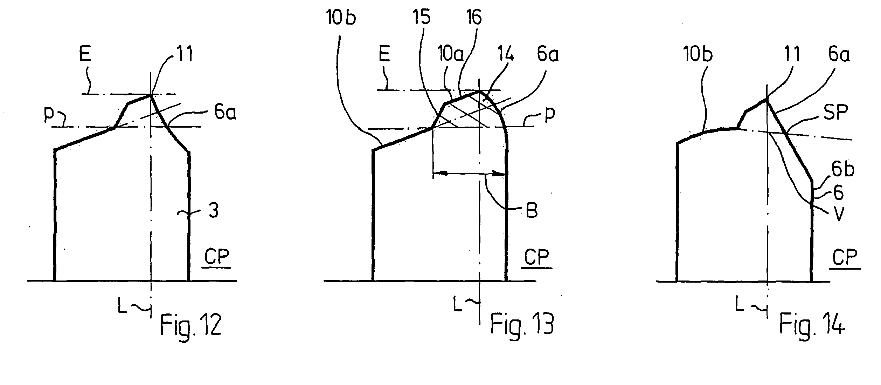

Die Figuren 9 bis 14 zeigen weitere Ausführungsvarianten eines Schneidelements 3 für ein erfindungsgemäßes Bohrwerkzeug. Bei den einzelnen Ausführungsvarianten wird lediglich auf die jeweiligen Besonderheiten eingegangen. Die Ausführungsvariante gemäß der Figur 9 zeigt wie auch die Ausführungsvarianten gemäß der Figuren 10 und 14 einen gewölbt verlaufenden zweiten Freiflächenabschnitt 10b, dessen tangentiale Verlängerung V eine aus zwei Abschnitten 6a, 6b zusammengesetzte Freifläche 6 in einem Schnittpunkt SP unterhalb einer Schneidkante 11 schneidet.

Das Schneidelement gemäß der Figur 11 weist einen Freiflächenabschnitt 10b auf, welcher in dieselbe Richtung wie eine Spanfläche 6 abfällt.

Bei der zehnten Ausführungsvariante gemäß der Figur 12 ist ein erster Spanflächenabschnitt 6a als konkave Wölbung ausgebildet.

Schließlich zeigt die Figur 13 eine elfte Ausführungsvariante eines Schneidelements 3 für ein erfindungsgemäßes Bohrwerkzeug, bei welchem ein erster Freiflächenabschnitt 10a als konvexer Polygonzug 15 ausgebildet ist, dessen erster Abschnitt 16 parallel zu einem zweiten Freiflächenabschnitt 10b verläuft. Der erste Freiflächeabschnitt 10a und ein zugehöriger erster Spanflächenabschnitt 6a definieren oberhalb einer Ebene P in räumlicher Betrachtung eine Rippe 14 (hier zum besseren Verständnis schraffiert dargestellt). Diese Rippe 14 weist eine horizontale Breite B auf, welche in einem Bereich von 0,2 mm bis 1,0 mm liegt.

Zum besseren Verständnis sind in den in den Figuren 4 bis 14 dargestellten Ausführungsvariante regelmäßig auch Bezugszeichen vorhanden, auf welchen in der Beschreibung zur einzelnen Figur nicht ausdrücklich hingewiesen wird. Hierbei handelt um Bezugszeichen, welche für alle Figuren in gleicher Weise bedeutsam sind.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch ein Bohrwerkzeug vor, dessen erster Freiflächenabschnitt als konvexer Polygonzug mit drei und mehr Abschnitten ausgebildet ist. Für die Freiflächenwinkel der einzelnen Abschnitte eines konvexen Polygonzugs gilt in der Regel α₁₁ < α₁₂ < α₁₃ ... < α₁ₙ. Abweichend von den dargestellten Ausführungsbeispielen sieht die Erfindung auch Schneidelemente vor, deren Schneidkante bzw. Schneidkanten in der Draufsicht und/oder in der Seitenansicht einen polygonenartigen Verlauf und/oder einen wellenförmigen Verlauf aufweisen.

Die erfindungsgemäße Ausgestaltung der Schneide ist selbstverständlich auch bei Schneidelementen vorgesehen, welche ohne Querschneide oder mit Zentrierspitze ausgestaltet sind. Ebenso können die Schneidelemente asymmetrisch gestaltet sein.

### Bezugszeichenliste:

- 1: Bohrwerkzeug
- 2: Bohrerkopf
- 3: Schneidelement, Schneidplatte
- 4: Bohrerwendel
- 5: schräge Fläche am Bohrerkopf 2
- 6: Spanfläche
- 6a, 6b: erster bzw. zweiter Spanflächenabschnitt
- 7: Bohrmehlnut
- 8: Hauptschneide
- 9: Hauptschneide
- 10: Freifläche
- 10a, 10b: erster bzw. zweiter Freiflächenabschnitt
- 11: Schneidkante
- 12: Querschneide
- 13: konvexe Wölbung
- 14: Rippe
- 15: konvexer Polygonzug
- 16: Abschnitt von 15
- 17: Abschnitt von 15
- α: Freiflächenwinkel
- β: Keilwinkel
- γ: Spanflächenwinkel
- CP: Schnittebene
- B: horizontale Breite von 14
- B₃: Breite von 3
- E: Ebene senkrecht zu L
- H: vertikale Höhe von 14
- L: Längsachse des Bohrwerkzeugs 1
- P: Ebene senkrecht zu L
- SE: Schneidelement
- SP: Schnittpunkt von 6 und V
- V: Verlängerung des zweiten Freiflächeabschnitts 10b
- d: Drehrichtung von 1 bzw. 3

## Patentansprüche

1. Bohrwerkzeug (1) insbesondere für eine schlagende Beanspruchung mit einem als Platte (3) oder Kopf ausgebildeten Schneidelement (3) mit wenigstens einer durch eine Spanfläche (6) und eine Freifläche (10) definierten Schneidkante (11), **dadurch gekennzeichnet, dass** der Schneidkante (11) ein erster Freiflächenabschnitt (10a) zugeordnet ist, welcher in einer Schnittebene (CP) liegt, die rechtwinklig von der Schneidkante (11) geschnitten wird, und durch eine konvexe Wölbung (13) oder einen konvexen Polygonzug (15) begrenzt ist, und dass die vertikale Höhe (H) einer durch den ersten Freiflächenabschnitt (10a) und einen zugehörigen ersten Spanflächenabschnitt (6, 6a) gebildeten Rippe (14) in einem Bereich von 0,1 mm bis 1,0 mm liegt.

2. Bohrwerkzeug nach Anspruch 1, **dadurch gekennzeichnet, dass** die vertikale Höhe (H) der Rippe (14) insbesondere in einem Bereich von 0,1 mm bis 0,5 mm liegt.

3. Bohrwerkzeug nach einem der vorhergehenden Ansprüche, **dadurch gekennzeichnet, dass** die vertikale Höhe (H) der Rippe (14) zu der Längsachse (L) des Bohrwerkzeugs hin zunimmt.

4. Bohrwerkzeug nach einem der vorhergehenden Ansprüche, **dadurch gekennzeichnet, dass** die vertikale Höhe (H) der Rippe (14) zur Längsachse (L) hin abnimmt.

5. Bohrwerkzeug nach einem der vorhergehenden Ansprüche, **dadurch gekennzeichnet, dass** auf den ersten Freiflächenabschnitt (10a) wenigstens ein zweiter Freiflächenabschnitt (10b) folgt.

6. Bohrwerkzeug nach einem der vorhergehenden Ansprüche, **dadurch gekennzeichnet, dass** auf den ersten Spanflächenabschnitt (6a) wenigstens ein zweiter Spanflächenabschnitt (6b) folgt.

7. Bohrwerkzeug nach einem der vorhergehenden Ansprüche, **dadurch gekennzeichnet, dass** eine Verlängerung (V) des zweiten Freiflächenabschnitts (10b) in eine Drehrichtung (d) des Bohrwerkzeugs (1) das Schneidelement (3) unterhalb der Schneidkante (11) durchläuft.

## Claims

1. Drilling tool (1), in particular for percussive duty, comprising a cutting element (3) configured as a tip (3) or head and having at least one cutting edge (11) defined by a rake face (6) and a flank (10), **characterized in that** there is assigned to the cutting edge (11) a first flank section (10a) which lies in a cutting plane (CP) intersected at right angles by the cutting edge (11) and is defined by a convex arch (13) or a convex polyline (15), and **in that** the vertical height (H) of a rib (14) formed by the first flank section (10a) and an associated first rake face section (6, 6a) is within the range of 0.1 to 1.0 mm.

2. Drilling tool according to Claim 1, **characterized in that** the vertical height (H) of the rib (14) is in particular within the range of 0.1 to 0.5 mm.

3. Drilling tool according to either of the preceding claims, **characterized in that** the vertical height (H) of the rib (14) increases towards the longitudinal axis (L) of the drilling tool.

4. Drilling tool according to one of the preceding claims, **characterized in that** the vertical height (H) of the rib (14) decreases towards the longitudinal axis (L).

5. Drilling tool according to one of the preceding claims, **characterized in that** at least one second flank section (10b) follows the first flank section (10a).

6. Drilling tool according to one of the preceding claims, **characterized in that** at least one second rake face section (6b) follows the first rake face section (6a).

7. Drilling tool according to one of the preceding claims, **characterized in that** an extension (V) of the second flank section (10b) in the direction of rotation (d) of the drilling tool (1) passes through the cutting element (3) below the cutting edge (11).

## Revendications

1. Aléseuse (1), en particulier pour une sollicitation par impact avec un élément de coupe (3) réalisé sous forme de plaque (3) ou de tête, avec au moins une arête de coupe (11) définie par une surface de coupe (6) et une surface libre (10), **caractérisée en ce qu'**à l'arête de coupe (11) est associée une première portion de surface libre (10a), qui est située dans un plan de coupe (CP) qui est coupé à angle droit depuis l'arête de coupe (11), et qui est limité par une courbure convexe (13) ou une ligne polygonale convexe (15), et **en ce que** la hauteur verticale (H) d'une nervure (14) formée par la première portion de surface libre (10a) et une première portion de surface de coupe (6, 6a) associée est comprise dans une plage de 0,1 mm à 1,0 mm.

2. Aléseuse selon la revendication 1, **caractérisée en ce que** la hauteur verticale (H) de la nervure (14) est située en particulier dans une plage de 0,1 mm à 0,5 mm.

3. Aléseuse selon l'une quelconque des revendications précédentes, **caractérisée en ce que** la hauteur verticale (H) de la nervure (14) augmente vers l'axe longitudinal (L) de l'aléseuse.

4. Aléseuse selon l'une quelconque des revendications précédentes, **caractérisée en ce que** la hauteur verticale (H) de la nervure (14) diminue vers l'axe longitudinal (L).

5. Aléseuse selon l'une quelconque des revendications précédentes, **caractérisée en ce que** la première portion de surface libre (10a) est suivie d'au moins une deuxième portion de surface libre (10b).

6. Aléseuse selon l'une quelconque des revendications précédentes, **caractérisée en ce que** la première portion de surface de coupe (6a) est suivie d'au moins une deuxième portion de surface de coupe (6b).

7. Aléseuse selon l'une quelconque des revendications précédentes, **caractérisée en ce qu'**un prolongement (V) de la deuxième portion de surface libre (10b) dans une direction de rotation (d) de l'aléseuse (1) passe à travers l'élément de coupe (3) en dessous de l'arête de coupe (11).
